# EUROPÄISCHE PATENTSCHRIFT

(11) **EP 3 025 919 B1**
(45) Veröffentlichungstag und Bekanntmachung des Hinweises auf die Patenterteilung: **01.05.2019**
(21) Anmeldenummer: 15003174.8
(22) Anmeldetag: 06.11.2015
(51) Int. Cl.: B60T 13/26, B60T 8/50, B60T 13/68

(54) **VERFAHREN ZUM STEUERN EINES PNEUMATISCHEN BREMSSYSTEMS UND DERARTIGES PNEUMATISCHES BREMSSYSTEM FÜR EIN FAHRZEUG**
METHOD FOR CONTROLLING A PNEUMATIC BRAKING SYSTEM AND SUCH A PNEUMATIC BRAKING SYSTEM FOR A VEHICLE
PROCEDE DE COMMANDE D'UN SYSTEME DE FREINAGE PNEUMATIQUE ET SYSTEME DE FREINAGE PNEUMATIQUE POUR UN VEHICULE

(30) Priorität: 28.11.2014 DE 102014017683
(43) Veröffentlichungstag der Anmeldung: 01.06.2016
(73) Patentinhaber: WABCO GmbH, 30453 Hannover (DE)
(72) Erfinder: Lenz, Thomas, 31275 Lehrte (DE); Roters, Gerd, 31515 Wunstorf (DE)
(74) Vertreter: Lauerwald, Jörg

(56) Entgegenhaltungen:
- EP-A1- 2 570 316
- EP-A1- 2 754 594
- DE-A1-102008 048 207
- US-A1- 2005 137 767
- US-B1- 6 371 573

## Beschreibung

Die Erfindung betrifft ein Verfahren zum Steuern eines pneumatischen Bremssystems bzw. zum Betreiben eines pneumatischen Bremssystems, und ein derartiges pneumatisches Bremssystem für ein Fahrzeug.

Das Verfahren ist insbesondere zur Durchführung eines selbsttätigen Regelungsverfahrens oder eines selbsttätig eingeleiteten Regelungsverfahrens vorgesehen.

Elektropneumatische Bremssysteme weisen im Allgemeinen eine elektronische Steuereinrichtung (ECU), pneumatische Radbremsen, Druckluftspeicher für mehrere Bremskreise und geeignete elektropneumatische und pneumatische Ventile auf.

Bei sogenannten EBS-Systemen erfolgt die Aussteuerung des an die pneumatischen Radbremsen ausgegebenen Bremsdrucks elektrisch über die elektronische Steuereinrichtung; es kann gegebenenfalls eine pneumatische Rückfallebene vorgesehen sein für den Fall, dass die elektrische Ansteuerung versagt. Derartige EBS-Systeme sind jedoch im Allgemeinen relativ komplex.

Elektropneumatische Bremssysteme ohne derartige vollständig elektronische Ansteuerung werden auch als ABS-Systeme bezeichnet und weisen im Allgemeinen unmittelbar vor den Radbremsen Sperrventile, auch ABS-Sperrventile genannt, sowie weiterhin eine Vorsteuer-Ventileinrichtung zur Ansteuerung der ABS-Sperrventile auf. Durch die Vorsteuer-Ventileinrichtung werden die ABS-Sperrventile angesteuert, die dann ihre verschiedenen Betriebsphasen einnehmen können; diese sind
- Druck erhöhen, d.h. eine Offenstellung,
- Druck halten, d.h. eine Sperrstellung, und
- Druck absenken, was in einer Entlüftungsstellung durch Entlüften der Bremsleitungen zu den Radbremsen, oder auch in einer Offenstellung durch Absenkung des Vorsteuerdruckes über die Vorsteuer-Ventileinrichtung erfolgen kann,
um den Bremsdruck an den Radbremsen einzustellen. Hierbei ist im Allgemeinen zusätzlich eine direkte Ansteuerung der ABS-Sperrventile über ein an das Bremspedal angeschlossenes Bremsventil möglich.

Die DE 10 2011 115 128 B4 zeigt ein derartiges Bremssystem und ein Verfahren zum Steuern oder Betreiben eines derartigen Bremssystems. Hierbei wird ein Druck zu Radbremsen eingegeben, die durch elektrische Ansteuerung der Steuereinrichtung alternierend ein- und ausgeschaltet werden, um ein gewünschtes Bremsverhalten, insbesondere für ein ACC (Automatic Cruise Control) als selbsttätiges Regelungsverfahren einzustellen.

Die DE 102 32 792 A1 beschreibt ein Bremsverfahren für ein Fahrzeug, das mit einem Antiblockiersystem (ABS) und einer Antriebsschlupfregelung (ASR), sowie weiterhin automatischen Einbremsungen wie ACC und Umkippverhinderung (RSC) ausgestattet ist. Hierbei erfolgt eine Bremsdruckverteilung zwischen angetriebenen und nicht angetriebenen Achsen. Das Bremspedal leitet über ein Bremsventil Druck an ABS-Sperrventile der Radbremsen weiter.

Die DE 10 2009 053 815 B4 beschreibt eine Betriebsbremseinrichtung eines Fahrzeugs, bei der ein Testlauf für die Ventile vorgesehen ist. Das Bremssystem weist ein druckeinsteuerndes 3/2-Wege-Ventil, Bremszylinder und ABS-Drucksteuerventile mit jeweils einem Einlassventil und einem Auslassventil auf.

Die EP 844 155 B1 beschreibt ein weiteres pneumatisches EBS-Bremssystem.

Die US 6 371 573 B1 beschreibt ein Bremssystem für ein Radfahrzeug umfassend eine Druckluftquelle, welche eine Luftbremseinrichtung betätigt, eine Bedienersteuerung für die Zufuhr von Luft zu der Bremsvorrichtung, eine elektronische Steuerung, die auf die Fahrzeuggeschwindigkeit und die Raddrehzahl anspricht, um wahlweise einen Antiblockierbremsmodus aufzurufen. Ein Steuerventil reagiert auf die elektronische Steuerung und die Bedienersteuerung, um selektiv die Zufuhr von Luft von der Druckluftquelle zu der Bremseinrichtung zu steuern. In dem Antiblockierbremsmodus wird das Steuerventil zunächst aktiviert, um Bremsdruck zu lösen, und danach abwechselnd aktiviert und deaktiviert, um Bremsdruck bei einem im Wesentlichen konstanten Druck zu halten und anschließend abwechselnd aktiviert und deaktiviert bei einem reduzierten Verhältnis der deaktivierten zur aktivierten Dauer den Bremsdruck wieder aufzubauen.

Die US 2005 0 137 767 A beschreibt ein Fahrzeugbremssystem, um eine Rollstabilitätssteuerung bzw. -regelung zur Verfügung zu stellen, umfassend: eine Bremskammer, die mit einem Fahrzeugrad assoziiert ist, das zu bremsen ist; ein durch Luftdruck gesteuertes bzw. geregeltes Relaisventil, um Luftdruck zu der Bremskammer zur Verfügung zu stellen; ein durch ein Solenoid gesteuertes bzw. geregeltes Pilot- bzw. Steuer- bzw. Schaltventil zum Steuern bzw. Regeln eines Flusses von Steuer- bzw. Regelluft zu dem Relaisventil; ein durch ein Solenoid gesteuertes bzw. geregeltes Zufuhrdruckventil, das betätigbar ist bzw. arbeitet, um entweder einen Zufuhrdruck oder Fahrersteuer- bzw. -regeldruck zu dem Schaltventil als Steuer- bzw. Regelluft für das Relaisventil zu richten; eine ECU, die betätigbar ist bzw. arbeitet, um die Solenoide auf dem Zufuhrdruckventil und dem Schaltventil zu steuern bzw. zu regeln; und Sensoren, um Fahrzeugbedingungen zu erfassen, welche in einer Bestimmung verwendet werden können, ob eine Rollstabilitätssteuerung bzw. -regelung zu initiieren ist.

Weiterhin sind grundsätzlich Verfahren zur Ansteuerung von Ventilen mittels Pulsweitenmodulation (PWM) bekannt. Die DE 196 106 65 C2, EP 134 7908 B1 und US 5815362 A1 beschreiben spezielle PWM-Signale.

PWM-Ansteuerungen ermöglichen eine Bestromung durch periodisches Ein- und Ausschalten des Stroms. Hierbei ist eine Pulsfrequenz bzw. Periode vorgegeben, in der die Pulsbreite des Einschaltpulses und entsprechend die nachfolgende Pulsbreite des Ausschaltpulses variiert werden können, um Ströme bzw. Leistungen zwischen einem Minimalwert und einem Maximalwert einstellen zu können. Bei Ansteuerung von elektromagnetischen Ventilen bzw. Solenoid-Ventilen kann somit ein zu verstellender Anker des Ventils in einem Schwebezustand gehalten werden, um dauerhaft diese mittlere Stellung zwischen einem Minimalwert und einem Maximalwert zu halten. Die PWM-Ansteuerung dient somit zum Ersatz eines mittleren Spannungswertes, da analog einzustellende mittlere Spannungswerte im Allgemeinen lediglich durch z. B. Potentiometer-Schaltungen oder andere, verlustbehaftete Schaltungen erzeugt werden können.

Der Erfindung liegt die Aufgabe zugrunde, ein Verfahren zum Steuern eines Bremssystems und ein derartiges Bremssystem für ein Fahrzeug zu schaffen, die mit relativ geringem Aufwand eine sichere Ansteuerung der Radbremsen ermöglichen.

Diese Aufgabe wird durch ein Verfahren nach Anspruch 1 und ein Bremssystem nach Anspruch 12 gelöst. Die Unteransprüche beschreiben bevorzugte Weiterbildungen.

Das erfindungsgemäße Bremssystem ist insbesondere zur Durchführung des erfindungsgemäßen Verfahrens vorgesehen.

Erfindungsgemäß wird somit ein Vorsteuerventil in Belüftungsphasen und Entlüftungsphasen derartig ausgesteuert, dass es einen Vorsteuerdruck auf eine Vorsteuerleitung ausgibt. Hierdurch kann in der angeschlossenen Vorsteuerleitung ein mittlerer Vorsteuerdruck zwischen einem Minimalwert und einem Maximalwert, insbesondere zwischen einem drucklosen Zustand und einem Vorratsdruck, in alternierenden Belüftungsphasen und Entlüftungsphasen eingestellt werden.

Der so eingestellte Vorsteuerdruck wird nachfolgend insbesondere direkt oder indirekt an ein Sperrventil, z. B. ABS-Sperrventil, ausgegeben, das einer Radbremse vorgeschaltet ist. Zwischen das Vorsteuerventil und das Sperrventil können z. B. ein Select-high-Ventil und/oder ein Relaisventil geschaltet sein.

Somit kann auf die Vorsteuerleitung bereits ein mittlerer Druckwert bzw. ein mittlerer Vorsteuerdruck ausgegeben werden, so dass die Sperrventile nachfolgend aus diesem mittleren Vorratsdruck - statt des hohen Vorratsdrucks - den Bremsdruck aussteuern können.

Hierdurch werden bereits einige Vorteile erreicht. So können die Schaltzeiten der Sperrventile gegenüber einer Ansteuerung mit einem hohen Vorratsdruck verringert werden; der Bremsdruck zu den Radbremsen kann hierdurch genauer eingestellt werden.

Das Vorsteuerventil ist insbesondere als 3/2-Wege-Ventil ausgebildet, das elektrisch von der Brems-Steuereinrichtung ausgesteuert wird. Hierbei ist es vorteilhafterweise mit seinem Eingangsanschluss an eine Zuleitung des Druckluftspeichers, mit seinem ersten Ausgangsanschluss an die Vorsteuerleitung und seinem anderen Ausgangsanschluss an einen Druckluftauslass, insbesondere eine Entlüftung angeschlossen. Ein so ausgebildetes 3/2-Wege-Vorsteuerventil kann somit die Vorsteuerleitung lediglich belüften zur Druckerhöhung und entlüften zum Druckabsenken. Es ist hierbei jedoch kostengünstig und solide ausbildbar.

Indem das 3/2-Wege-Vorsteuerventil z. B. zur Einleitung der selbsttätigen Bremsung von einem drucklosen Zustand durch mehrere aufeinanderfolgende Schaltperioden mit jeweils einer Einschaltzeit und einer Ausschaltzeit angesteuert wird, wird somit der mittlere Vorsteuerdruck (mittleres einzustellendes Vorsteuerdruck-Niveau) angelegt bzw. stoßweise, insbesondere in abnehmenden Druckschritten bzw. abnehmender Differenz erreicht. In dieser Einstellzeit erfolgen somit mehrere aufeinanderfolgende Belüftungsphasen und Entlüftungsphasen statt einer direkten Befüllung bzw. Belüftung zum schnellen Erreichen des Vorsteuerdrucks.

Die Einstellzeit ist somit größer als die Schaltperiode und kann insbesondere mehr als zwei Schaltperioden aufweisen.

Diese zeitliche Verzögerung und die während dieser Einstellzeit erfolgenden Druckluftverluste der Ausschaltzeiten bzw. Entlüftungszeiten werden erfindungsgemäß bewusst in Kauf genommen; es wird erkannt, dass ein hierdurch eingestellter mittlerer Vorsteuerdruck deutliche Vorteile für die nachgeschalteten Sperrventile ermöglicht.

Weiterhin kann diese Ausbildung in vorteilhafter Weise mit einem Select-high-Ventil kombiniert werden, das an das Vorsteuerventil angeschlossen ist und ergänzend eine Fahrer-Steuerleitung von einem durch das Bremspedal des Fahrers ausgesteuerten Bremsventil aufnimmt. Somit kann bei Vorliegen eines höheren Fahrer-Bremswunsches des Fahrers direkt dieser Fahrer-Bremsdruck ausgesteuert werden und die von der elektrischen Steuereinrichtung ausgesteuerte Regelung hierdurch überwunden werden bzw. als nachrangig unterdrückt werden. Da bei einem derartigen Verfahren vorteilhafterweise die relevante Taktung nicht mehr an den ABS-Sperrventilen durchzuführen ist, kann somit vom Fahrer direkt ein geeignetes mittleres Vorsteuer-Druckniveau zu den ABS-Sperrventilen ausgegeben werden, die dieses direkt aussteuern können.

Anders als z. B. bei PWM-Ansteuerungen von Solenoiden dient somit das Vorsteuersignal mit seinen Einschaltzeiten und Ausschaltzeiten nicht zur Einstellung eines Schwebezustandes bzw. mittleren Niveaus, sondern tatsächlich zur Durchführung von Einschaltzeiten und Ausschaltzeiten unter mechanischer Verstellung eines internen Ankers.

In den Einschaltzeiten ist vorteilhafterweise das Vorsteuerventil derartig in seine Belüftungsstellung ausgesteuert, insbesondere vollständig ausgesteuert, dass eine Belüftung und somit Druckerhöhung der Vorsteuerleitung. erfolgt. In den Ausschaltzeiten bzw. Entlüftungszeiten wird entsprechend der Druck in der Vorsteuerleitung auch abgesenkt. Vorteilhafterweise wird das Vorsteuerventil hierbei vollständig in seine Entlüftungsstellung geschaltet.

Somit lassen sich auch durch ein ABS-Bremssystem Vorsteuerungen der ABS-Sperrventile erreichen, die nachfolgend genaue und sichere Regelungen ermöglichen.

Somit können selbsttätige Brems-Regelverfahren eingeleitet werden, d. h. ohne vorliegenden Fahrerwunsch bzw. unabhängig von vorliegenden Fahrer-Bremswunschsignalen. Diese Regelverfahren sind insbesondere ein ACC-bzw. Abstandsregelverfahren, ein elektronisches Stabilitätsprogramm zur Verhinderung von Fahrzeuginstabilitäten, insbesondere gegen Schleudern und/oder Umkippen, d. h. gegenüber ungewollten Gierbewegungen und Wankbewegungen, weiterhin auch selbsttätige Bremsanleitungen für Pre-Crash-Bremsungen bei Erkennung eines bevorstehenden Crashs bzw. Auffahrunfalls, sowie auch Verfahren zum selbsttätigen Verhindern einer Unfallsituation und der Sensierung eines oder mehrerer weiterer Verkehrsteilnehmer, z. B. ein AEBS, sowie eine Antriebsschlupfregelung (ASR).

Vorteilhafterweise kann somit für die Ausbildung des Vorsteuerventils sowie auch der ABS-Sperrventile eine an sich bekannte Hardware-Ausbildung vorgesehen sein, so dass lediglich eine spezifische Ansteuerung durch das Verfahren erfolgt.

Alternativ hierzu kann jedoch auch das Vorsteuerventil geeignet hierfür ausgelegt werden, z. B. mit geeignetem Solenoid- oder geeigneten Federn.

Die Erfindung wird im Folgenden anhand der beiliegenden Zeichnungen an einigen Ausführungsformen näher erläutert. Es zeigen:
- Fig. 1: ein Schaltdiagramm eines elektropneumatischen Bremssystems eines Fahrzeuges, mit Ausschnittsvergrößerung;
- Fig. 2: ein zeitliches Diagramm des Vorsteuer-Bremssignals und des Vorsteuerdrucks;
- Fig. 3: Darstellungen des Vorsteuerventils;
- Fig. 4: eine zu Fig. 1 alternative Ausführungsform eines elektropneumatischen Bremssystems mit einem Anhänger-Bremssystem ohne Sperrventile,
- Fig. 5: eine weitere Ausführungsform elektropneumatischen Bremssystems ohne Select-High-Ventil ; und
- Fig. 6: ein Flussdiagramm des erfindungsgemäßen Verfahrens.

Ein elektropneumatisches Bremssystem 1 für ein hier lediglich angedeutetes Nutzfahrzeug 2 ist Teil eines Druckluftsystems des Nutzfahrzeugs 2, wobei das Druckluftsystem mit Kompressor, Lufttrockner und weiteren Ventilen hier nicht detaillierter gezeigt ist. Das Fahrzeug 2 weist eine Vorderachse VA und eine Hinterachse HA auf; grundsätzlich kann das Nutzfahrzeug 2 noch weitere Achsen aufweisen. An das elektropneumatische Bremssystem 1 des Nutzfahrzeugs 2 kann ein - hier nur angedeutetes - Anhänger-Bremssystem 4 eines Anhängerfahrzeugs in üblicher Weise angeschlossen werden.

Das Bremssystem 1 weist eine elektronische Brems-Steuereinrichtung (ECU) 6, ein Bremspedal 7 mit durch das Bremspedal 7 betätigtem Bremsventil 8, drei Druckluftspeicher, nämlich einen ersten Druckluftspeicher 10 für einen ersten Bremskreis 14, hier den ersten Bremskreis 14 der Hinterachse HA, einen zweiten Druckluftspeicher 11 für einen zweiten Bremskreis 15, hier den zweiten Bremskreis 15 der Vorderachse VA, sowie einen dritten Druckluftspeicher 12 für einen Nebenverbraucherkreis, hier insbesondere ein dritter Bremskreis 16 für das Anhänger-Bremssystem 4. Wie eingezeichnet, können die Druckluftspeicher 10, 11 und 12 jeweils auch zur Entnahme von Steuerdruck für die jeweils anderen Bremskreise 14, 15 bzw.16 herangezogen werden.

Nachfolgend wird insbesondere der zweite Bremskreis 15 der Vorderachse VA betrachtet; der erste Bremskreis 14 der Hinterachse HA ist grundsätzlich entsprechend aufgebaut; ein als Hilfs-Bremskreis oder dritter Bremskreis 16 für das Anhänger-Bremssystem 4 vorgesehener Nebenverbraucherkreis weist demgegenüber gegebenenfalls einige bauliche Änderungen auf, die nachfolgend erläutert werden. Vorteilhafterweise kann das Verfahren zur Steuerung bzw. zum Betrieb des Bremssystems 1 für einen, mehrere oder sämtliche Bremskreise 14, 15 und 16 des Bremssystems 1 durchgeführt werden.

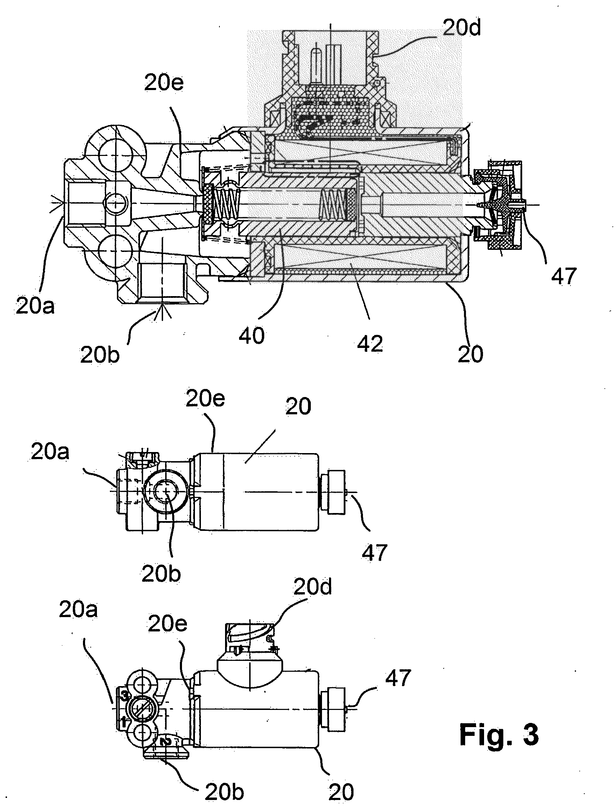

Das Bremsventil 8 steuert Druckluft von dem zweiten Druckluftspeicher 11 in Abhängigkeit der Betätigung des Bremspedals 7 auf eine Fahrer- Steuerleitung 18, an die ein Select-high-Ventil 19 mit einem ersten Eingang 19a angeschlossen ist; an den dritten Druckluftspeicher 12 (oder grundsätzlich auch einen anderen Druckluftspeicher) ist über eine Druckluft-Zuführleitung 120 weiterhin ein als 3/2-Wege-Ventil ausgebildetes Vorsteuerventil 20 mit seinem Eingangsanschluss 20a angeschlossen, wobei ein erster Ausgangsanschluss 20b an eine Vorsteuerleitung 22 angeschlossen ist, die wiederum an einen zweiten Eingang 19b des Select-high-Ventils 19 angeschlossen ist. Weiterhin ist an dem Vorsteuerventil 20 eine Entlüftung 47 vorgesehen, entweder wie in Fig. 3 gezeigt bereits integriert in dem Vorsteuerventil 20, z. B. als Entlüftungskappe 20c, oder als weiterer Anschluss an eine gemeinsame Entlüftung des Bremssystems 1 oder des Vorderachs-Bremskreises 15.

Ein Ausgang 19c des Select-high-Ventils 19 führt über eine zweite Vorsteuerleitung 34 und eine Relaisventil 24 sowie Aussteuer-Bremsleitungen 35, 36 zu zwei ABS-Sperrventilen 25 und 26, an die wiederum über Bremsleitungen 32, 33 pneumatische Radbremsen (Bremszylinder) 29 und 30 der Vorderachse VA angeschlossen sind.

Das Relaisventil 24 dient - in üblicher Weise - lediglich der Erhöhung der geschalteten Druckluftmenge: Der in die Brems-Steuerleitung 34 durchgesteuerte Vorsteuerdruck p_34 steuert das Relaisventil 24, so dass Vorratsdruck aus dem zweiten Druckluftspeicher 11 in Abhängigkeit dieser Ansteuerung auf die Aussteuer-Bremsleitungen 35 und 36 ausgegeben wird, vorteilhafterweise in direkter proportionaler Abhängigkeit bzw. in proportionaler Erhöhung des Luftstroms.

Das Vorsteuerventil 20 empfängt mit seinem elektrischen Steuereingang 20d Vorsteuersignale S1 von der Brems-Steuereinrichtung 6. Die ABS-Sperrventile 25 und 26 empfangen entsprechend Bremssignale S2 und S3 von der Brems-Steuereinrichtung 6.

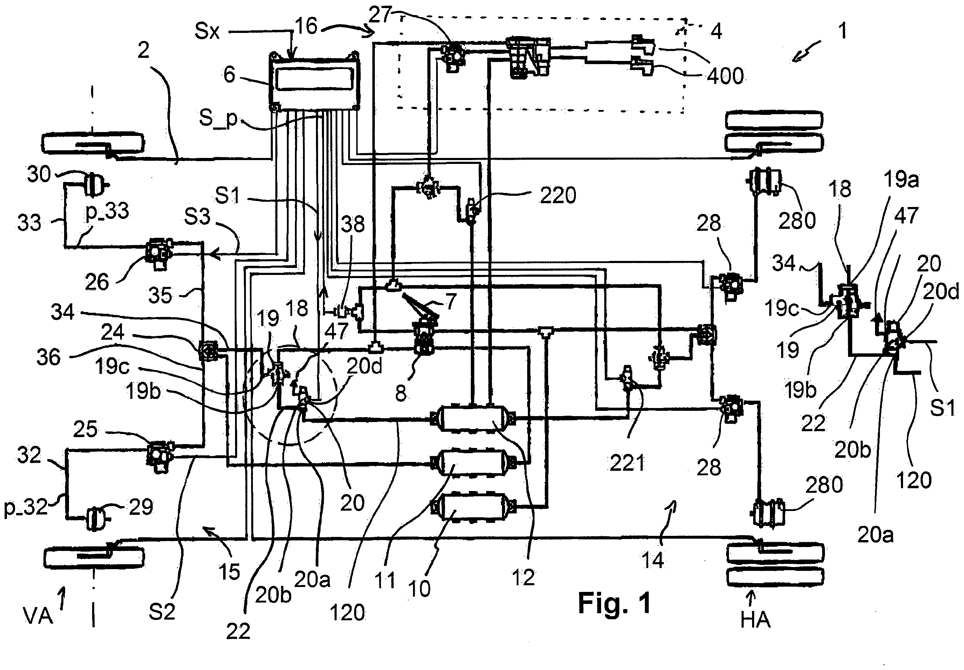

Der erste Bremskreis 14 der Hinterachse HA ist in der Ausführungsform der Fig. 1 entsprechend mit einem Vorsteuerventil 220, einem Select-High-Ventil 191 und ABS-Sperrventilen 26 ausgebildet, die von dem Vorsteuerventil 220 mit einem Vorsteuerdruck p_220 angesteuert werden. Entsprechend ist im dritten Bremskreis 16 für das Anhänger- Bremssystem 4 ein ABS-Sperrventil 27 vorgesehen, das von einem Vorsteuerventil 221 mit einem Vorsteuerdruck p_221 über ein Select-High-Ventil 190 angesteuert wird, d.h. entsprechend dem zweiten Bremskreis 15 der Vorderachse VA.

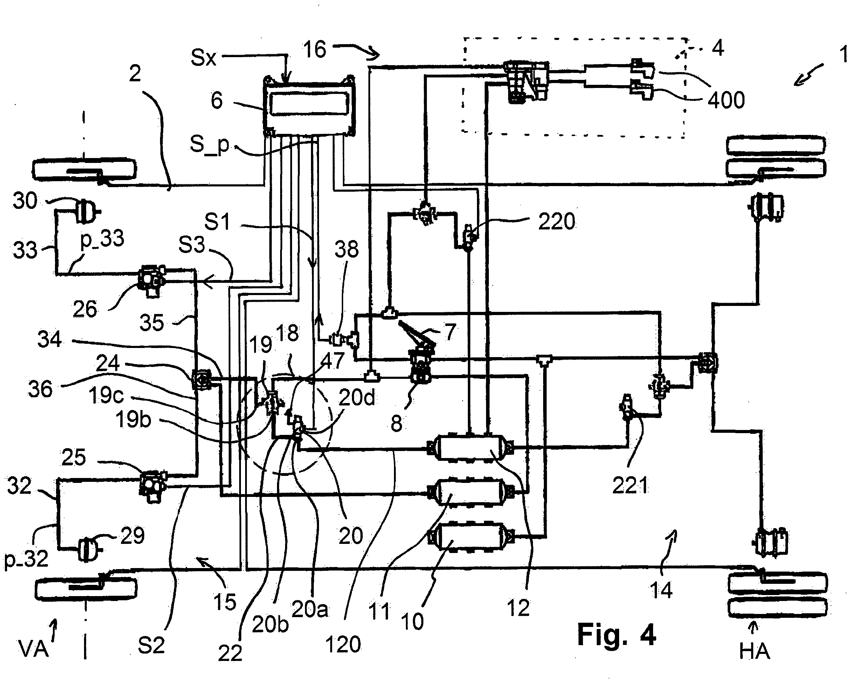

Grundsätzlich ist die Erfindung jedoch auch ohne die Zwischenschaltung eines Sperrventils realisierbar, so dass der Vorsteuerdruck p_22, p_220 und/oder p_221 direkt den Radbremsen als Bremsdruck zugeführt wird. Fig. 4 zeigt eine derartige Ausführungsform, bei der in dem dritten Bremskreis 16 des Anhänger- Bremssystems und in dem Bremskreis 14 der Hinterachse HA keine Sperrventile vorgesehen sind.

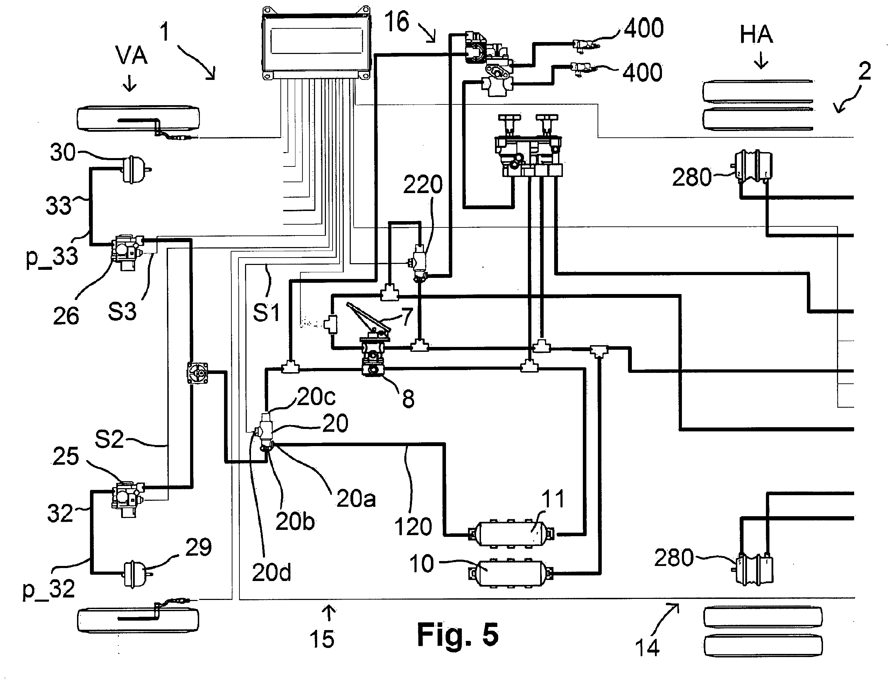

Fig. 5 zeigt eine weitere Ausführungsform, bei der die Bremskreise 14, 15 und 16 ohne die in Fig. 1 gezeigten Select-Low-Ventile 19, 190, 191 ausgebildet sind.

Die ABS-Sperrventile 25 und 26 sind in an sich bekannter Weise aufgebaut; die Darstellung als elektrisch angesteuertes 2/2-Wege-Ventil ist hierbei verallgemeinert; im Allgemeinen weisen derartige ABS-Sperrventile 25, 26 zwei einzelne 2/2-Wege-Ventile auf, die eine Entlüftung der von den ABS- Sperrventilen 25 und 26 zu der jeweiligen Radbremse 29 bzw. 30 ausgehenden Bremsleitung 32, 33 zu ermöglichen. Somit können die ABS-Sperrventile 25, 26 auch anders ausgebildet sein; für ihre Funktion ist vorteilhafterweise relevant, dass sie folgende Betriebsphasen einnehmen können:
Betriebsphase Bp1: Druckerhöhung, d.h. es wird in einer Offenstellung Aussteuer-Bremsdruck p_35, p_36 von der Aussteuer-Bremsleitung 35, 36 zu den Bremsleitungen 32 bzw. 33 durchgelassen,
Betriebsphase Bp2: Druck Halten oder Druck Sperren: den in der Bremsleitung 32 bzw. 33 vorliegende Bremsdruck p_33, p_32 wird gehalten und eingesperrt, ohne die jeweilige Bremsleitung 32, 33 zu entlüften, Betriebsphase Bp3: Druck senken/ Entlüften: Der Bremsdruck p_32, p_33 in der Bremsleitung 32 bzw. 33 wird durch Entlüftung an die Umgebung abgesenkt.

Durch diese drei Betriebsphasen Bp1 bis Bp3 kann somit direkt ein ABS-Regelverfahren durchgeführt werden bei anliegendem durchgesteuerten Aussteuer-Bremsdruck p_35 bzw. p_36, sowohl bei einer selbsttätigen als auch einer vom Fahrer eingeleiteten Bremsung; weiterhin können durch die ABS-Sperrventile 25 und 26 jedoch auch selbsttätige Regelungen bei einem anliegenden durchgesteuerten Aussteuer-Bremsdruck p_35, p_36 durchgeführt werden.

Das Select-high-Ventil 19 dient bei der gezeigten Ausbildung dazu, jeweils den höheren der beiden anliegenden Drücke, d. h. den Vorsteuerdruck p_22 oder den vom Fahrer über das Bremspedal 7 und das Bremsventil 8 direkt durchgesteuerten, auf die Fahrer-Steuerleitung 18 gegebenen Fahrer-Steuerdruck p_18 durchzulassen.

Bei einer vom Fahrer eingeleiteten Bremsung wird der Bremswunsch des Fahrers wird über einen Drucksensor 38 sensiert und somit ein Druck-Messsignal als Bremswunschsignal S_p an die Brems-Steuereinrichtung 6 eingegeben. Die Brems-Steuereinrichtung 6 steuert nachfolgend mit den Vorsteuersignalen S1 das Vorsteuerventil 20 dahingehend, dass Druckluft von dem dritten Druckluftspeicher 12 über die Vorsteuerleitung 22 zu dem Select-high-Ventil 19 ausgegeben wird, das weiterhin den Fahrer-Bremsdruck p18 aufnimmt und den höheren der beiden Werte durchlässt.

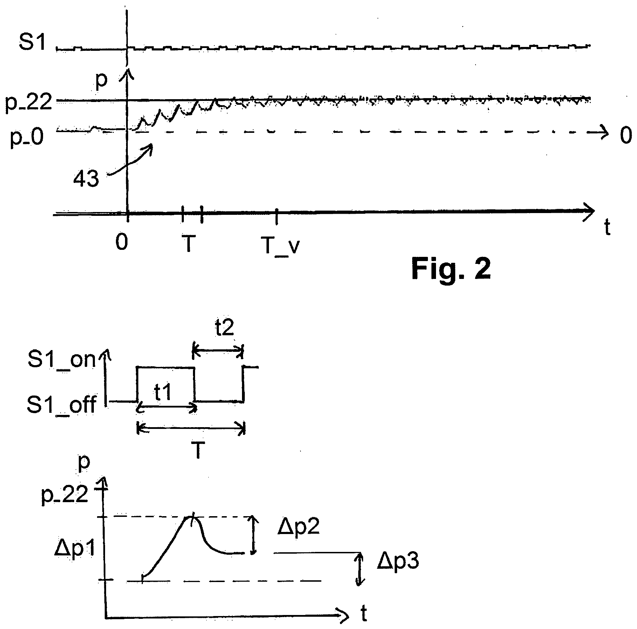

Für eine selbsttätige Bremsung nimmt die Brems-Steuereinrichtung 6 z. B. ein Fahrdynamik-Signal und/oder ein Bremsanforderungssignal Sx über eine fahrzeuginterne Datenleitung auf und berechnet ein angemessener Vorsteuerdruck p_22, der insbesondere auch unterhalb eines maximalen Vorratsdrucks p12 bzw. p11 von z. B. 12 bar der Druckluftspeicher 11 oder 12 liegen kann und nachfolgend als mittlerer Vorratsdruck p_12_mid bezeichnet wird und z. B. p_12_mid = 3 bar sein kann. Die selbsttätige Einstellung des mittlerer Vorsteuerdrucks p_12_mid wird nachfolgend mit Bezug zu dem Signaldiagramm der Fig. 2 beschrieben:
Fig. 2 zeigt einen Einschaltvorgang des Vorsteuerventils 22, bei dem das Vorsteuerventil 22 von seiner Entlüftungsstellung mit entlüfteter Vorsteuerleitung 22 auf den mittleren Vorsteuerdruck p_12_mid = 3 bar ausgesteuert wird. Hierbei erfolgt eine gepulste bzw. zeitweise Schaltung des Vorsteuerventils 20. Das Vorsteuerventil 20 wird alternierend ein- und ausgeschaltet.

Das Vorsteuersignal S1 wird hierzu als digitales Signal mit den Signalniveaus S1_off (niedriger Spannungspegel) und S1_on (hoher Spannungspegel) geschaltet, z. B. mit einer festen Schaltperiode T, in der jeweils eine Einschaltzeit t1 mit S1 = 1 und einer Ausschaltzeit t2 mit S1 = 0 aufeinanderfolgen. Gemäß dieser Ausführungsform ist somit die Schaltperiode T zeitlich konstant. Weiterhin sind gemäß dieser Ausführungsform auch t1 und t2 konstant. Es folgt somit durch ein gepulstes Vorsteuersignal S1 eine Einstellung des mittleren Vorsteuerdrucks p_22_mid = 3 bar auf die Vorsteuerleitung 22 und nachfolgend im Normalfall über das Select-high-Ventil 19 auf das Relaisventil 24, wenn kein höherer Fahrerwunsch vorliegt.

In den Einschaltzeiten t1 und den Ausschaltzeiten t2 wird hierbei ein in Fig. 3 gezeigter Anker 40 durch Bestromung des Solenoids (Elektromagneten) 42 jeweils verstellt, d.h. mechanisch verstellt. Das Vorsteuersignal dient somit nicht lediglich dazu, einen mittleren Spannungswert durch schnelle Taktung einzustellen und hierdurch einen Schwebezustand des Ankers 40 zu erreichen; vielmehr wird das Vorsteuerventil 20 tatsächlich geschaltet.

Vorteilhafterweise wird das Vorsteuerventil 20 in den Ausschaltzeiten t2 vollständig in seine Entlüftungsstellung geschaltet, und nachfolgend in einer Einschaltzeit t1 vollständig in seine Belüftungsstellung geschaltet. Somit tritt in einer Schaltperiode T tatsächlich ein Druckluftverbrauch auf, wie auch aus Fig. 2 zu erkennen ist. Hierbei kann eine Schaltperiode T z. B. im Bereich von 100 ms bis 300 ms, z. B. bei T = 200 ms liegen. Die Einschaltzeiten t1 und Ausschaltzeiten t2 können somit jeweils anteilig hiervon sein, z. B. im Bereich von 10 % bis 90 % der Schaltperiode T. Die Schaltperiode T = 200 ms liegt deutlich unter einer gesamten Einschaltzeit T_v = 1 s.

Die Einschaltzeit T_v umfasst somit mehr als zwei, insbesondere drei oder mehr Schaltperioden T.

Somit erfolgt ein allmählicher, schrittweiser Druckaufbau, wobei in der Einschaltzeit T_v in jeder Schaltperiode T der Vorsteuerdruck p_22 insgesamt erhöht wird, indem die Druckerhöhung delta_p1 in der Belüftungsphase t1 der Schaltperiode T größer als die nachfolgende Druckabsenkung delta_p2 in der unmittelbar nachfolgenden Entlüftungsphase t2 ist. Die Differenz delta_p1 - delta_p2 = delta_p3 ist jeweils eine positive Drucksteigerung delta_p3, wobei die positive Drucksteigerung delta_p3 allmählich abnimmt und bei t= T_v etwa Null wird.

Das Vorsteuerventil 20 liefert somit einen Vorsteuerdruck p_22 und entsprechend über das Select-high-Ventil 19 und das Relaisventil 24 einen Aussteuer-Bremsdruck p_35, p_36 in der Aussteuer-Bremsleitung 35 zu dem ABS-Sperrventil 26 sowie entsprechend auch zu dem ABS-Sperrventil 25, wobei der Aussteuer-Bremsdruck p_35, p_36 bei Fehlen eines Fahrerwunsches dem mittleren Vorsteuerdruck p_12_mid entspricht und z. B. 3 bar beträgt. Somit kann der Aussteuer-Bremsdruck p_35, p_36 von den ABS-Sperrventilen 25 und 26 entsprechend ihrer Ansteuerung durch die Bremssignale S2, S3 geschaltet werden. Die Bremssignale S2 und S3 können hierbei die drei Betriebsphasen Bp1, Bp2, Bp3 einnehmen. Indem die ABS-Sperrventile 25 und 26 somit einen mittleren Vorsteuerdruck p_12_mid statt wie bei herkömmlichen Systemen den Vorratsdruck p11 des zweiten Druckluftspeichers 11 durchsteuern, kann die Aussteuerung durch die ABS-Sperrventile 25 und 26 für die verschiedenen von der Brems- Steuereinrichtung 6 durchgeführten Regelverfahren genauer und mit weniger Schaltvorgängen der ABS-Sperrventile 25 und 26 erfolgen.

Durch die Bremssignale S2 und S3 können hierbei insbesondere folgende Regelungsverfahren bzw. selbsttätigen Regelungen durchgeführt werden:
Elektronische Stabilitätsprogramme (ESP,ESC) zur Fahrstabilisierung, insbesondere zur Verhinderung von Fahrzeug-Instabilitäten wie Wanken, Schleudern usw., Notfall-Bremssysteme zum selbsttätigen Abbremsen bei Erkennung einer hinreichenden Kollisionswahrscheinlichkeit oder einer Kollisionsgefahr, Pre-Crash-Bremssysteme zur Verringerung der Unfallfolgen bei erkannter bevorstehender Kollision, Kolonnenfahrten (ACC - Automatic Cruise Control) und weiteren umweltbezogenen bzw. Umfeld bezogenen selbsttätigen Bremsungen, weiterhin auch Antriebsschlupfregelsystemen (ASR).

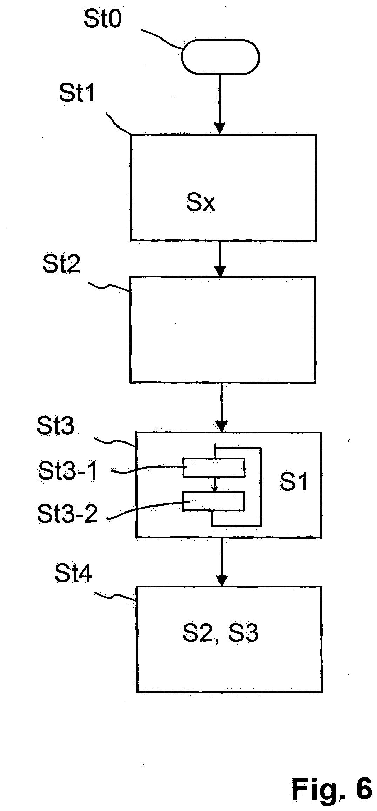

Das erfindungsgemäße Verfahren umfasst somit gemäß dem Flussdiagramm der Fig. 6 folgende Schritte:
Nach einem Start in Schritt St0, z. B. bei Starten des Fahrzeugs oder Einschalten der Zündung, wird nachfolgend in Schritt St1 eine selbsttätige Fahrdynamikregelung bzw. Brems-Regelung eingeleitet, z. B. in Abhängigkeit einer Umfeldsensorik oder anderer, von dem Brems-Steuergerät 6, z. B. einer angeschlossenen Datenleitung, eingegebener oder aufgenommener Bremsanforderungs-Signale Sx
Nachfolgend wird in Schritt St2 von der Brems-Steuereinrichtung 6 ein Vorsteuer-Bremsdruck p_22 ermittelt, wozu die Brems-Steuereinrichtung 6 Schaltperioden T und Einschaltzeiten t1 sowie Ausschaltzeiten t2, mit t1 + t2 = T, ermittelt, wobei die Werte T und t1 jeweils zeitlich konstant sind oder zeitlich variieren sollen
Der Vorsteuer-Bremsdruck p_22 wird nachfolgend in Schritt St3 durch Ausgabe der Vorsteuersignale S1 über das Vorsteuerventil 22 ausgesteuert.

In Schritt St3 wird das Vorsteuer-Bremssignal S1 dann entsprechend in der Modulierung bzw. mit Einschalt- und Ausschaltzeiten gemäß Fig. 2 ausgegeben, so dass ein Vorsteuer-Bremsdruck p_22 entsprechend Fig. 2 nachfolgend schrittweise bzw. allmählich eingestellt wird.
In aufeinanderfolgenden Teilschritten St3-1, St3-2 wird somit:
das Vorsteuerventil 20 in Teilschritt St3-1 in einer Belüftungsphase t1 geöffnet und eine Druckerhöhung delta_p1 in der Vorsteuerleitung 22 erreicht, nachfolgend in Teilschritt St3-2 jeweils in einer Entlüftungsphase t2 die Vorsteuerleitung 22 etwas entlüftet und somit eine Druckabsenkung delta_p2 erreicht, die insgesamt jeweils eine Drucksteigerung delta_p3 ergeben, bis der mittlere Vorsteuer-Bremsdruck p_22_mid erreicht ist.

Weiterhin kann die Brems-Steuereinrichtung 6 in Schritt St4 Bremssignale S2, S3 an die ABS-Sperrventile 25 und 26 ausgeben, so dass diese entsprechend durch geeignete Taktung einen Bremsdruck p_32 und p_33 zur Ansteuerung der Radbremsen 29 und 30 einstellen.

### Bezugszeichenliste

- 1: elektropneumatisches Bremssystem
- 2: Nutzfahrzeug
- 4: Anhänger-Bremssystem
- 6: elektronische Brems-Steuereinrichtung (ECU)
- 7: Bremspedal
- 8: Bremsventil
- 10: erster Druckluftspeicher
- 11: zweiter Druckluftspeicher
- 12: dritter Druckluftspeicher
- 14: erster Bremskreis der Hinterachse HA
- 15: zweiter Bremskreis der Vorderachse VA
- 16: dritter Bremskreis für das Anhänger-Bremssystem 4
- 18: Fahrer- Steuerleitung

- 19: Select-high-Ventil
- 19a: erster Eingang des Select-high-Ventils 19
- 19b: zweiter Eingang des Select-high-Ventils 19
- 19c: Ausgang des Select-high-Ventils 19

- 20: 3/2-Wege-Ventil Vorsteuerventil
- 20a: Eingangsanschluss
- 20b: erster Ausgangsanschluss
- 20c: Entlüftungs-Kappe oder Entlüftungs-Anschluss des Vorsteuerventils 20
- 20d: elektrischer Steuereingang des Vorsteuerventils 20
- 22: Vorsteuerleitung
- 24: Relaisventil
- 25: ABS-Sperrventil
- 26: ABS-Sperrventil
- 27: ABS-Sperrventil
- 28: ABS-Sperrventil
- 29: pneumatische Radbremse (Bremszylinder) der Vorderachse VA
- 30: pneumatische Radbremse (Bremszylinder) der Vorderachse VA
- 32: Bremsleitung
- 33: Bremsleitung
- 34: zweite Vorsteuerleitung
- 35: Aussteuer-Bremsleitung
- 36: Aussteuer-Bremsleitung

- 38: Drucksensor
- 40: Anker
- 42: Solenoid (Elektromagnet)
- 47: Entlüftung

- 120: Druckluft-Zuführleitung

- 280: Radbremsen an Hinterachse HA

- 400: Radbremsen im Anhänger-Bremssystem 4

- HA: Hinterachse
- VA: Vorderachse

- Bp1: Betriebsphase. Druckerhöhung
- Bp2: Betriebsphase: Druck Halten oder Druck Sperren
- Bp3: Betriebsphase: Druck senken/ Entlüften

- p11: maximaler Vorratsdruck des Druckluftspeichers p11
- p12: maximaler Vorratsdruck des Druckluftspeichers p21
- p_12_mid: mittlerer Vorratsdruck
- p_18: Fahrer-Steuerdruck
- p_22: Vorsteuerdruck
- p_32: Bremsdruck zur Ansteuerung der Radbremse 29
- p_33: Bremsdruck zur Ansteuerung der Radbremse 30
- p_34: durchgesteuerter Vorsteuerdruck; in die Brems-Steuerleitung 34 durchgesteuert
- p_35: Aussteuer-Bremsdruck
- p_36: Aussteuer-Bremsdruck

- delta_p1: Druckerhöhung des Vorsteuerdrucks p_22 in Belüftungsphase t1
- delta_p2: Druckabsenkung in Entlüftungsphase t2
- delta_p3: positive Drucksteigerung

- S1: Vorsteuersignale
- S2: Bremssignale von der Brems-Steuereinrichtung 6
- S3: Bremssignale von der Brems-Steuereinrichtung 6

- S1_off: niedriger Spannungspegel
- S1_on: hoher Spannungspegel

- S_p: Bremswunschsignal
- Sx: Bremsanforderungssignal

- T: Schaltperiode
- t1: Einschaltzeit mit S1 = 1
- t2: Ausschaltzeit mit S1 = 0
- T_v: gesamte Einschaltzeit

- Schritt St0: Start
- Schritt St1: selbsttätige Fahrdynamikregelung bzw. Brems-Regelung
- Schritt St2: Ermittlung des Vorsteuer-Bremsdrucks p_22 durch Brems-Steuereinrichtung 6

- Schritt St3: Aussteuerung des Vorsteuer-Bremsdrucks p_22 durch Ausgabe der Vorsteuersignale S1 über das Vorsteuerventil 22, vorzugsweise durch Modulierung bzw. mit Einschalt- und Ausschaltzeiten

- Teilschritt St3-1: Öffnen des Vorsteuerventils 20 in einer Belüftungsphase t1 mit Druckerhöhung delta_p1 in der Vorsteuerleitung 22

- Teilschritt St3-2: Entlüften der Vorsteuerleitung 22 jeweils in einer Entlüftungsphase t2 mit Druckabsenkung delta_p2

## Patentansprüche

1. Verfahren zum Steuern eines pneumatischen Bremssystems (1) eines Fahrzeugs (2), mit mindestens folgenden Schritten:
Aussteuern eines Vorsteuer-Bremsdrucks (p_22) durch ein elektropneumatisches Vorsteuerventil (20) in Belüftungsphasen (t1; S1_on) und Entlüftungsphasen (t2; S2_off);
Zuführen des Vorsteuerdrucks (p_22) über eine Vorsteuerleitung (22) zur Ausgabe eines Bremsdrucks (p_33, p_32) zu Radbremsen (29, 30) des Fahrzeugs (1), wobei das Vorsteuerventil (20) von einem entlüfteten Zustand (p_0) aus in alternierenden Belüftungsphasen (t1) und Entlüftungsphasen (t2) derartig zur selbsttätigen Aussteuerung eines mittleren Vorsteuer-Druckniveaus (p_22_mid) ausgesteuert wird, dass in den Belüftungsphasen (t1) der Vorsteuerdruck (p_22) erhöht und in den Entlüftungsphasen (t2) verringert wird, **dadurch gekennzeichnet, dass** bei Einleitung eines selbsttätigen Bremsvorgangs (43) aus einem bremsfreien Zustand (p_0) das mittlere Vorsteuer-Bremsniveau (p_mid) durch mehrere Schaltperioden (T) mit jeweils einer Belüftungsphase (t1) unter Erhöhung des in der Vorsteuerleitung (22) vorliegenden Vorsteuerdrucks (p_22) und einer nachfolgenden Entlüftungsphase (t2) unter Absenkung des Vorsteuerdrucks (p_22) eingestellt wird und wobei die Einstellung des mittleren Vorsteuer-Bremsniveaus (p_mid) in einer Einstellzeit (T_v) erfolgt, die größer als die Schaltperiode (T) ist.

2. Verfahren nach Anspruch 1, **dadurch gekennzeichnet, dass** der Vorsteuerdruck (p_22) über die Vorsteuerleitung (22) zu mindestens einem Sperrventil (25, 26), insbesondere einem ABS-Sperrventil (25, 26), zugeführt wird zur Ausgabe des Bremsdrucks (p_33, p_32) von dem Sperrventil (25, 26) zu den Radbremsen (29, 30) des Fahrzeugs (1).

3. Verfahren nach Anspruch 2, **dadurch gekennzeichnet, dass** der von dem Vorsteuerventil (20) ausgegebene Vorsteuerdruck (p_22) nachfolgend über ein Select-high-Ventil (19) und /oder ein Relaisventil (24) als durchgesteuerter Vorsteuerdruck (p_35, p_36) zu dem mindestens einen Sperrventil (25, 26) ausgegeben wird.

4. Verfahren nach Anspruch 2 oder 3, **dadurch gekennzeichnet, dass** das Sperrventil (25, 26) durch Bremssignale (S2, S3) in die folgenden Betriebsphasen eingestellt wird, um den Bremsdruck (p_32, p_33) einzustellen:
Offenstellung zum Druckerhöhen oder Drucksenken über die Vorsteuerleitung (22),
Sperrstellung zum Druckhalten,
Entlüftungsstellung zum Druckabbau.

5. Verfahren nach Anspruch 1, **dadurch gekennzeichnet, dass** das der Vorsteuerdruck (p_22) über die Vorsteuerleitung (22) ohne Zwischenschaltung eines Sperrventils zu den Radbremsen (29, 30) geführt wird, insbesondere zu den Radbremsen (400) eines Anhänger-Bremssystems (4).

6. Verfahren nach einem der vorherigen Ansprüche, **dadurch gekennzeichnet, dass** das Vorsteuerventil (20) in den Belüftungsphasen (t1) einen Vorratsdruck (p12) eines Druckluftspeichers (12) auf die Vorsteuerleitung (22) durchsteuert und in den Entlüftungsphasen (t2) die Vorsteuerleitung (22) mit einer drucklosen Drucksenke, z. B. einem Luftauslass, verbindet.

7. Verfahren nach Anspruch 1, **dadurch gekennzeichnet, dass** die Einstellzeit (T_v) mehr als zweimal so groß wie die Schaltperiode (T), insbesondere mehr als dreimal so groß wie die Schaltperiode (T) ist.

8. Verfahren nach einem der Ansprüche 1 bis 7, **dadurch gekennzeichnet, dass** in der Einstellzeit (T_v) in jeder Schaltperiode (T) der Vorsteuerdruck (p_22) insgesamt erhöht wird, indem die Druckerhöhung (delta_p1) in der Belüftungsphase (t1) größer als die Druckabsenkung (delta_p2) in der nachfolgenden Entlüftungsphase (t2) ist.

9. Verfahren nach einem der vorherigen Ansprüche, **dadurch gekennzeichnet, dass** bei der selbsttätigen Aussteuerung des mittleren Vorsteuer-Druckniveaus (p_22_mid) in den alternierenden Belüftungs-phasen (t1) und Entlüftungsphasen (t2) ein Anker (40) des Vorsteuerventils (22) bewegt wird.

10. Verfahren nach einem der vorherigen Ansprüche, **dadurch gekennzeichnet, dass** es bei Einleitung einer selbsttätigen Bremsung ohne Vorliegen eines Fahrerwunsch-Signals (S_p) durchgeführt wird, z.B. für ein oder mehrere der folgenden Regelungsverfahren: ACC, CC, Notbremsung, Pre-Crash-Bremsung, elektronisches Stabilitäts-programm zur Verringerung oder Verhinderung von Instabilitäten (ESP), Antriebsschlupfregelung (ASR), Antirollbremse (ARB).

11. Verfahren nach einem der vorherigen Ansprüche, **dadurch gekennzeichnet, dass** über mehrere Vorsteuerventile (20, 220, 221) parallel oder unabhängig voneinander jeweils ein Vorsteuer-Druckniveau (p_22_mid, p_220_mid, p_221_mid) zu jeweils mindestens einem Bremskreis (4, 14, 15) zugeführt wird.

12. Pneumatisches Bremssystem (1) für ein Fahrzeug, insbesondere Nutzfahrzeug (2), wobei das Bremssystem (1) mindestens aufweist:
eine elektronische Brems-Steuereinrichtung (6) zur Aufnahme eines Fahrerbremswunsch-Signals (S_p) und zur Durchführung eines selbsttätigen Brems-Regelungsverfahrens durch Ausgabe von Bremssignalen (S2, S3) und Vorsteuer- Bremssignalen (S1),
eine Vorsteuerleitung (22),
Bremsleitungen (32, 33) und an die Bremsleitungen (32, 33) angeschlossene pneumatische Radbremsen (29, 30),
mindestens ein Sperrventil (25, 26), das direkt oder indirekt an die Vorsteuerleitung (22) angeschlossen ist, einen durchgesteuerten Vorsteuerdruck (p_35, p_36) aufnimmt und einen Bremsdruck (p_32, p_33) in der angeschlossenen Bremsleitung (32, 33) einstellt,
ein Vorsteuerventil (20) zur Ausgabe eines Vorsteuerdrucks (p_22) auf die Vorsteuerleitung (22) in Abhängigkeit der Vorsteuer- Bremssignale (S1), wobei die elektronische Brems-Steuereinrichtung (6) zur selbsttätigen Aussteuerung eines mittleren Vorsteuer-Druckniveaus (p_22_mid) in der Vorsteuerleitung (22) alternierend Vorsteuer- Bremssignale (S1) an das Vorsteuerventil (20) ausgibt derartig, dass es das Vorsteuerventil (20) von einem entlüfteten Zustand (p_0) aus in alternierenden Belüftungsphasen (t1) und Entlüftungsphasen (t2) aussteuert und hierbei in den Belüftungsphasen (t1) den Vorsteuerdruck (p_22) erhöht und in den Entlüftungsphasen (t2) verringert, **dadurch gekennzeichnet, dass**
bei Einleitung eines selbsttätigen Bremsvorgangs (43) aus einem bremsfreien Zustand (p_0) das mittlere Vorsteuer-Bremsniveau (p_mid) durch mehrere Schaltperioden (T) mit jeweils einer Belüftungsphase (t1) unter Erhöhung des in der Vorsteuerleitung (22) vorliegenden Vorsteuerdrucks (p_22) und einer nachfolgenden Entlüftungsphase (t2) unter Absenkung des Vorsteuerdrucks (p_22) eingestellt wird und wobei die Einstellung des mittleren Vorsteuer-Bremsniveaus (p_mid) in einer Einstellzeit (T_v) erfolgt, die größer als die Schaltperiode (T) ist.

13. Bremssystem (1) nach Anspruch 44 12, **dadurch gekennzeichnet, dass**
das Vorsteuerventil (20) angeschlossen ist an:
- die Vorsteuerleitung (22)
- einen Druckluftspeicher (12) mit einem Vorratsdruck (p_12),
- eine Drucksenke, z. B. eine Entlüftung.

14. Bremssystem (1) nach Anspruch 13, **dadurch gekennzeichnet, dass** das Vorsteuerventil (20) ein elektrisch ausgesteuertes 3/2-Wegeventil (20) ist, das an den Druckluftspeicher (12), die Vorsteuerleitung (22) sowie die Entlüftung angeschlossen ist und die Vorsteuersignale (S1) der Brems-Steuereinrichtung (6) aufnimmt.

15. Bremssystem (1) nach einem der Ansprüche 12 bis 14, **dadurch gekennzeichnet, dass** es weiterhin aufweist:
ein Bremspedal (7), ein durch das Bremspedal (7) geschaltetes Bremsventil (8) zur Aussteuerung eines Fahrer-Steuerdrucks (p_18), und
ein Select-high-Ventil (19), wobei das Select-high-Ventil (19) den jeweils größeren Eingangsdruck des Vorsteuerdrucks (p_22) oder des Fahrer-Steuerdrucks (p_18) durchlässt.

16. Bremssystem (1) nach einem der Ansprüche 12 bis 15, **dadurch gekennzeichnet, dass** zwischen das Vorsteuerventil (20) und die Sperrventile (25, 26) ein Relaisventil (24) zur Erhöhung einer Druckluft-menge geschaltet ist.

17. Bremssystem (1) nach einem der Ansprüche 12 bis 16, **dadurch gekennzeichnet, dass** das mindestens eine Sperrventil (25, 26) als ABS-Sperrventil (25, 26) ausgebildet ist und in folgende Betriebsphasen einstellbar ist:
Offenstellung zum Druckerhöhen oder Drucksenken über die Vorsteuerleitung (22),
Sperrstellung zum Druckhalten,
Entlüftungsstellung zum Druckabbau.

18. Bremssystem (1) nach einem der Ansprüche 13 bis 17, **dadurch gekennzeichnet, dass** es mehrere Bremskreise (4, 14, 15) aufweist, von denen mindestens einer ausgewählt ist aus der Gruppe:
erster Bremskreis (14) einer Hinterachse (HA), zweiter Bremskreis (15) einer Vorderachse (VA) und Anhänger-Bremssystem (4),
wobei für jeden Bremskreis (4, 14, 15) ein separates Vorsteuerventil (20, 220, 221) und eine an das Vorsteuerventil (20, 220, 221) angeschlossene Vorsteuerleitung (22) zugeordnet ist.

## Claims

1. Method for controlling a pneumatic brake system (1) of a vehicle (2), having at least the following steps:
modulating a pilot-control brake pressure (p_22) by means of an electropneumatic pilot-control valve (20) in venting phases (t1; S1_on) and bleeding phases (t2; S2_off);
feeding in the pilot-control pressure (p_22) via a pilot-control line (22) for outputting a brake pressure (p_33, p_32) to wheel brakes (29, 30) of the vehicle (1), wherein the pilot-control valve (20) is modulated from a bled state (p_0) in alternating venting phases (t1) and bleeding phases (t2) in order to automatically modulate an average pilot-control pressure level (p_22_mid), in such a way that the pilot-control pressure (p_22) is increased in the venting phases (t1), and decreased in the bleeding phases (t2), **characterized in that**, when an automatic braking process (43) is initiated from a braking-free state (p_0), the average pilot-control braking level (p_mid) is set by means of a plurality of switching periods (T), each with a venting phase (t1) increasing the pilot-control pressure (p_22) present in the pilot-control line (22), and a subsequent bleeding phase (t2) reducing the pilot-control pressure (p_22) and wherein the average pilot-control braking level (p_mid) is set in a setting time (T_v) which is longer than the switching period (T).

2. Method according to Claim 1, **characterized in that** the pilot-control pressure (p_22) is fed to at least one check valve (25, 26), in particular an ABS check valve (25, 26) via the pilot-control line (22), in order to output the brake pressure (p_33, p_32) from the check valve (25, 26) to the wheel brakes (29, 30) of the vehicle (1).

3. Method according to Claim 2, **characterized in that** the pilot-control pressure (p_22) which is output by the pilot-control valve (20) is subsequently output as a fed-through pilot-control pressure (p_35, p_36) to the at least one check valve (25, 26) via a select-high valve (19) and/or a relay valve (24).

4. Method according to Claim 2 or 3, **characterized in that** the check valve (25, 26) is set to the following operating phases by means of brake signals (S2, S3), in order to set the brake pressure (p_32, p_33):
open position for increasing the pressure or reducing the pressure via the pilot-control line (22),
closed position for maintaining the pressure, and
bleeding position for decreasing the pressure.

5. Method according to Claim 1, **characterized in that** the pilot-control pressure (p_22) is conducted to the wheel brakes (29, 30), in particular to the wheel brakes (400) of a trailer brake system (4), via the pilot-control line (22) without the intermediate connection of a check valve.

6. Method according to one of the preceding claims, **characterized in that** in the venting phases (t1) the pilot-control valve (20) feeds through a supply pressure (p12) of a compressed air accumulator (12) to the pilot-control line (22), and in the bleeding phases (t2) it connects the pilot-control line (22) to a pressureless pressure sink, for example an air outlet.

7. Method according to Claim 1, **characterized in that** the setting time (T_v) is more than twice as long as the switching period (T), in particular more than three times as long as the switching period (T) .

8. Method according to one of Claims 1 to 7, **characterized in that** in the setting time (T_v), the pilot-control pressure (p_22) is increased overall in each switching period (T) by virtue of the fact that the pressure increase (delta_p1) is greater in the venting phase (t1) than the pressure reduction (delta_p2) in the subsequent bleeding phase (t2).

9. Method according to one of the preceding claims, **characterized in that**, when the average pilot-control pressure level (p_22_mid) is modulated automatically, an armature (40) of the pilot-control valve (22) is moved in the alternating venting phases (t1) and bleeding phases (t2).

10. Method according to one of the preceding claims, **characterized in that** it is carried out when automatic braking is initiated without the presence of a driver's request signal (S_p), for example for one or more of the following control methods: ACC, CC, emergency braking, pre-crash braking, electronic stability program for decreasing or preventing instabilities (ESP), traction control (TC), anti-roll braking (ARB).

11. Method according to one of the preceding claims, **characterized in that**, over a plurality of pilot-control valves (20, 220, 221), in each case a pilot-control pressure level (p_22_mid, p_220_mid, p_221_mid) is fed in parallel or independently of one another to in each case at least one brake circuit (4, 14, 15).

12. Pneumatic brake system (1) for a vehicle, in particular utility vehicle (2), wherein the brake system (1) has at least: an electronic brake control device (6) for receiving a driver's braking request signal (S_p) and for carrying out an automatic brake control method by outputting brake signals (S2, S3) and pilot-control brake signals (S1),
a pilot-control line (22),
brake lines (32, 33) and pneumatic wheel brakes (29, 30) which are connected to the brake lines (32, 33),
at least one check valve (25, 26) which is connected directly or indirectly to the pilot-control line (22), receives a fed-through pilot-control pressure (p_35, p_36) and sets a brake pressure (p_32, p_33) in the connected brake line (32, 33),
a pilot-control valve (20) for outputting a pilot-control pressure (p_22) to the pilot-control line (22) as a function of the pilot-control brake signals (S1), wherein, in order to automatically modulate an average pilot-control pressure level (p_22_mid) in the pilot-control line (22), the electronic brake control device (6) alternately outputs pilot-control brake signals (S1) to the pilot-control valve (20) in such a way that it modulates the pilot-control valve (20) from a bled state (p_0) in alternating venting phases (t1) and bleeding phases (t2), and in the process increases the pilot-control pressure (p_22) in the venting phases (t1) and decreases it in the bleeding phases (t2), **characterized in that**, when an automatic braking process (43) is initiated from a braking-free state (p_0), the average pilot-control braking level (p_mid) is set by means of a plurality of switching periods (T), each with a venting phase (t1) increasing the pilot-control pressure (p_22) present in the pilot-control line (22), and a subsequent bleeding phase (t2) reducing the pilot-control pressure (p-_22) and wherein the average pilot-control braking level (p_mid) is set in a setting time (T_v) which is longer than the switching period (T).

13. Brake system (1) according to Claim 12, **characterized in that** the pilot-control valve (20) is connected to:
- the pilot-control line (22),
- a compressed air accumulator (12) with a supply pressure (p_12), and
- a pressure sink, for example a bleeding means.

14. Brake system (1) according to Claim 13, **characterized in that** the pilot-control valve (20) is an electrically modulated 3/2 way valve (20) which is connected to the compressed air accumulator (12), to the pilot-control line (22) and to the bleeding means, and receives the pilot-control signals (S1) of the brake control device (6).

15. Brake system (1) according to one of Claims 12 to 14, **characterized in that** it also has:
a brake pedal (7), a brake valve (8) which is actuated by means of the brake pedal (7) and has the purpose of modulating a driver control pressure (p_18), and a select-high valve (19), wherein the select-high valve (19) passes through the respectively higher input pressure of the pilot-control pressure (p_22) or of the driver control pressure (p_18).

16. Brake system (1) according to one of Claims 12 to 15, **characterized in that** a relay valve (24) for increasing a quantity of compressed air is connected between the pilot-control valve (20) and the check valves (25, 26).

17. Brake system (1) according to one of Claims 12 to 16, **characterized in that** the at least one check valve (25, 26) is embodied as an ABS check valve (25, 26) and can be set to the following operating phases:
open position for increasing the pressure or reducing the pressure via the pilot-control line (22),
closed position for maintaining the pressure, and
bleeding position for decreasing the pressure.

18. Brake system (1) according to one of Claims 13 to 17, **characterized in that** it has a plurality of brake circuits (4, 14, 15), at least one of which is selected from the group:
a first brake circuit (14) of a rear axle (HA), a second brake circuit (15) of a front axle (VA), and a trailer brake system (4), wherein a separate pilot-control valve (20, 220, 221) and a pilot-control line (22) connected to the pilot-control valve (20, 220, 221) are assigned to each brake circuit (4, 14, 15).

## Revendications

1. Procédé de commande d'un système de freinage pneumatique (1) d'un véhicule (2), comprenant au moins les étapes suivantes:
commander une pression de freinage pilote (p_22) par une vanne pilote électropneumatique (20) dans des phases d'admission d'air (t1; S1_on) et des phases d'évacuation d'air (t2; S2_off);
envoyer la pression pilote (p_22) par une conduite pilote (22) pour la production d'une pression de freinage (p_33, p_32) à des freins de roue (29, 30) du véhicule (1), dans lequel on commande la vanne pilote (20) à partir d'un état évacué (p_0) en des phases d'admission d'air (t1) et des phases d'évacuation d'air (t2) alternées pour la commande automatique d'un niveau de pression pilote moyen (p_0_mid), de telle manière que la pression pilote (p_22) soit accrue dans les phases d'admission d'air (t1) et réduite dans les phases d'évacuation d'air (t2), **caractérisé en ce que**, lors du lancement d'une opération de freinage automatique (43) à partir d'un état sans freinage (p_0), le niveau de freinage pilote moyen (p_mid) est réglé par plusieurs périodes de commutation (T) avec respectivement une phase d'admission d'air (t1) avec augmentation de la pression pilote (p_22) présente dans la conduite pilote (22) et une phase suivante d'évacuation d'air ((2) avec abaissement de la pression pilote (p_22) et dans lequel on effectue le réglage du niveau de freinage pilote moyen (p_mid) en un temps de réglage (T_v) qui est supérieur à la période de commutation (T).

2. Procédé selon la revendication 1, **caractérisé en ce que** l'on fournit la pression pilote (p_22) par la conduite pilote (22) à au moins une vanne d'arrêt (25, 26), en particulier une vanne d'arrêt ABS (25, 26), pour l'envoi de la pression de freinage (p_33, p_32) de la vanne d'arrêt (25, 26) aux freins de roue (29, 30) du véhicule (1).

3. Procédé selon la revendication 2, **caractérisé en ce que** la pression pilote (p_22) envoyée par la vanne pilote (20) est ensuite envoyée via une vanne Select-high (19) et/ou une vanne relais (24) comme pression pilote communiquée (p_35, p_36) à ladite au moins une vanne d'arrêt (25, 26).

4. Procédé selon une revendication 2 ou 3, **caractérisé en ce que** l'on règle la vanne d'arrêt (25, 26) par des signaux de freinage (S2, S3) dans les phases de fonctionnement suivantes, afin de régler la pression de freinage (p_32, p_33):
position ouverte pour augmenter la pression ou réduire la pression via la conduite pilote (22),
position fermée pour maintenir la pression,
position d'évacuation d'air pour annuler la pression.

5. Procédé selon la revendication 1, **caractérisé en ce que** l'on conduit la pression pilote (p_22) par la conduite pilote (22) sans interposition d'une vanne d'arrêt jusqu'aux freins de roue (29, 30), en particulier jusqu'aux freins de roue (400) d'un système de freinage de remorque (4).

6. Procédé selon l'une quelconque des revendications précédentes, **caractérisé en ce que** la vanne pilote (20) communique dans les phases d'admission d'air (t1) une pression de réserve (p12) d'un réservoir d'air comprimé (12) à la conduite pilote (22) et relie dans les phases d'évacuation d'air (t2) la conduite pilote (22) à un puits de pression sans pression, par exemple à un échappement d'air.

7. Procédé selon la revendication 1, **caractérisé en ce que** le temps de réglage (T_v) est plus de deux fois plus long que la période de commutation (T), en particulier plus de trois fois plus long que la période de commutation (T).

8. Procédé selon l'une quelconque des revendications 1 à 7, **caractérisé en ce que** l'on augmente globalement la pression pilote (p_22) dans le temps de réglage (T_v) dans chaque période de commutation (T), par le fait que l'augmentation de pression (delta_pl) dans la phase d'admission d'air (t1) est supérieure à la baisse de pression (delta_p2) dans la phase d'évacuation d'air qui suit (t2).

9. Procédé selon l'une quelconque des revendications précédentes, **caractérisé en ce que** lors de la commande automatique du niveau de pression pilote moyen (p_22_mid), on déplace un induit (40) de la vanne pilote (22) dans les phases d'admission d'air (t1) et les phases d'évacuation d'air (t2) alternées.

10. Procédé selon l'une quelconque des revendications précédentes, **caractérisé en ce que** l'on exécute le procédé lors du lancement d'un freinage automatique sans la présence d'un signal de souhait du conducteur (S_p), par exemple pour un ou plusieurs des processus de régulation suivants: ACC, CC, freinage d'urgence, freinage avant collision, programme électronique de stabilité destiné à réduire ou à empêcher des instabilités (ESP), régulation d'anti-patinage (ASR), freinage antiroulis (ARB).

11. Procédé selon l'une quelconque des revendications précédentes, **caractérisé en ce que** l'on envoie par plusieurs vannes pilotes (20, 220, 221), en parallèle ou de façon indépendante l'un de l'autre, respectivement un niveau de pression pilote (p_22_mid, p_220_mid, p_221_mid) à chaque fois au moins un circuit de freinage (4, 14, 15).

12. Système de freinage pneumatique (1) pour un véhicule, en particulier un véhicule utilitaire (2), dans lequel le système de freinage (1) présente au moins:
un système électronique de commande de freinage (6) pour recevoir un signal de souhait de freinage du conducteur (S_p) et pour exécuter un processus automatique de régulation de freinage par l'émission de signaux de freinage (S2, S3) et de signaux de freinage pilotes (S1),
une conduite pilote (22),
des conduites de freinage (32, 33) et des freins de roue pneumatiques (29, 30) raccordés aux conduites de freinage (32, 33),
au moins une vanne d'arrêt (25, 26), qui est raccordée directement ou indirectement à la conduite pilote (22), qui reçoit une pression pilote communiquée (p_35, p_36) et qui règle une pression de freinage (p_32, p_33) dans la conduite de freinage raccordée (32, 33),
une vanne pilote (20) pour envoyer une pression pilote (p_22) dans la conduite pilote (22) en fonction des signaux de freinage pilotes (S1),
dans lequel le système électronique de commande de freinage (6) envoie pour la commande automatique d'un niveau de pression pilote moyen (p_22_mid) dans la conduite pilote (22) en alternance des signaux de freinage pilotes (S1) à la vanne pilote (22), de telle manière qu'il commande la vanne pilote (20) à partir d'un état évacué (p_0) en des phases d'admission d'air (t1) et des phases d'évacuation d'air (t2) alternées et que de cette manière il augmente la pression pilote (p_22) dans les phases d'admission d'air (t1) et qu'il la diminue dans les phases d'évacuation d'air (t2), **caractérisé en ce que**, lors du lancement d'une opération de freinage automatique (43) à partir d'un état sans freinage (p_0), le niveau de freinage pilote moyen (p_mid) est réglé par plusieurs périodes de commutation (T) avec respectivement une phase d'admission d'air (t1) avec augmentation de la pression pilote (p_22) présente dans la conduite pilote (22) et une phase suivante d'évacuation d'air (t2) avec abaissement de la pression pilote (p_22) et dans lequel on effectue le réglage du niveau de freinage pilote moyen (p_mid) en un temps de réglage (T_v) qui est supérieur à la période de commutation (T).

13. Système de freinage (1) selon la revendication 12, **caractérisé en ce que** la vanne pilote (20) est raccordée à:
- la conduite pilote (22),
- un réservoir d'air comprimé (12) avec une pression de réserve (p_12),
- un puits de pression, par exemple une évacuation d'air.

14. Système de freinage (1) selon la revendication 13, **caractérisé en ce que** la vanne pilote (20) est une vanne à 3/2 voies à commande électrique (20), qui est raccordée au réservoir d'air comprimé (12), à la conduite pilote (22) ainsi qu'à l'évacuation d'air, et qui reçoit les signaux pilotes (S1) du système de commande de freinage (6).

15. Système de freinage (1) selon l'une quelconque des revendications 12 à 14, **caractérisé en ce qu'**il présente en outre:
une pédale de frein (7), une vanne de freinage (8) commutée par la pédale de frein (7) pour la commande d'une pression de commande du conducteur (p_18), et une vanne Select-high (19), dans lequel la vanne Select-high (19) laisse passer la pression d'entrée la plus élevée de la pression pilote (p_22) ou de la pression de commande du conducteur (p_18) respectivement.

16. Système de freinage (1) selon l'une quelconque des revendications 12 à 15, **caractérisé en ce qu'**une vanne relais (24) permettant d'augmenter le débit d'air comprimé est montée entre la vanne pilote (20) et les vannes d'arrêt (25, 26).

17. Système de freinage (1) selon l'une quelconque des revendications 12 à 16, **caractérisé en ce que** ladite au moins une vanne d'arrêt (25, 26) est constituée par une vanne d'arrêt ABS (25, 26) et peut être réglée aux phases de fonctionnement suivantes:
position ouverte pour augmenter la pression ou réduire la pression via la conduite pilote (22),
position fermée pour maintenir la pression,
position d'évacuation d'air pour annuler la pression.

18. Système de freinage (1) selon l'une quelconque des revendications 13 à 17, **caractérisé en ce qu'**il présente plusieurs circuits de freinage (4, 14, 15), parmi lesquels au moins un est choisi dans le groupe:
premier circuit de freinage (14) d'un essieu arrière (HA), second circuit de freinage (15) d'un essieu avant (VA), et système de freinage de remorque (4),
dans lequel une soupape pilote séparée (20, 220, 221) et une conduite pilote (22) raccordée à la vanne pilote (20, 220, 221) est associée à chaque circuit de freinage (4, 14, 15).
